# EUROPÄISCHE PATENTANMELDUNG

(11) **EP 0 965 470 A1**
(43) Veröffentlichungstag der Anmeldung: **22.12.1999**
(21) Anmeldenummer: 99110649.3
(22) Anmeldetag: 02.06.1999
(51) Int. Cl.: B60J 7/22, B60R 21/13

(54) **Überrollschutz-System für ein Kraftfahrzeug, insbesondere für ein Cabriolet**

(30) Priorität: 16.06.1998 DE 19826672
(71) Anmelder: Bayerische Motoren Werke Aktiengesellschaft, 80788 München (DE)
(72) Erfinder: Premm, Günther, 85591 Vaterstetten (DE)

(57) **Zusammenfassung**

Das beschriebene Überrollschutz-System umfaßt einen translatorisch aus einer abgesenkten Ruhelage in eine über die Brüstungslinie eines Fahrzeugs nach oben überstehende Wirkstellung verlagerbaren Überrollbügel (1), an dem ein Windschutz (14) angebracht ist.

Der Überrollbügel (1) ist nicht nur aus seiner abgesenkten Ruhelage sensorgesteuert in seine voll ausgefahrene Wirkstellung verlagerbar, sondern auch in einer Zwischenstellung arretierbar, die niedriger ist als die Wirkstellung des Überrollbügels, aber bereits eine ausreichende Höhe hat, um mit dem Windschutz (14) die Windschutzfunktion einwandfrei zu erfüllen. Das System erlaubt ein automatisches Aus- und Einfahren des Windschutzes (14) und eine montagefreundliche und ästhetisch günstige Integration in das Fahrzeug.

## Beschreibung

Die Erfindung bezieht sich auf ein Überrollschutz-System für ein Kraftfahrzeug, insbesondere für ein Cabriolet nach dem Oberbegriff des Patentanspruches 1.

Ein bekanntes Überrollschutz-System dieser Art (DE 41 19 529 A1) weist einen Überrollbügel auf dessen gesamter über die Brüstungslinie reichender Querschnitt mit einem gering luftdurchlässigen Netz bespannt ist. Soll der Windschutz wirksam sein, muß der Überrollbügel insgesamt in seine voll ausgefahrene Position, also in seine Wirkstellung verlagert werden. Der voll ausgefahrene Überrollbügel beeinträchtigt die Ästhetik.

Es ist auch bekannt (DE 39 14 035 C1), bei einem zweiteiligen, zusammenklappbaren Windschutz mittels eines willkürlich hochfahrbaren Überrollbügels das abgeklappte Windschutzteil so weit nach oben zu schwenken, daß es in Griffweite einer auf den Vordersitzen sitzenden Person kommt. Das Windschutzteil kann dann von Hand in seine Wirkstellung geschwenkt werden, in der es verrastet.

Weiterhin ist es bekannt (DE 195 34 584 C1), an einem feststehenden Überrollbügel einen aus mehreren Teilen bestehenden Windschutz anzuordnen. Der Windschutz stellt eine gewisse Sichtbehinderung dar, da er wegen des feststehenden Überrollbügels nicht einfach abgesenkt werden kann.

Der Erfindung liegt die Aufgabe zugrunde, ein mit einem Windschutz versehenes Überrollschutz-System der vorausgesetzten Gattung zu schaffen, das optisch anspricht und mit dem der Windschutz so verlagerbar ist, daß er seine Schutzfunktion gegen den störenden "Rückenwind" schon gut erfüllt und trotzdem eine möglichst geringe Sichtbehinderung darstellt.

Außerdem soll das Überrollschutz-System gut in ein Fahrzeug integrierbar sein.

Diese Aufgabe wird erfindungsgemäß durch ein Überrollschutz-System mit den Merkmalen des Patentanspruches 1 gelöst.

Weitere vorteilhafte Einzelheiten der Erfindung ergeben sich aus den Unteransprüchen.

Ein Antrieb, mit dem der Überrollbügel translatorisch aus einer voll abgesenkten Lage in die voll ausgefahrene Lage gebracht werden kann, ist so gewählt, daß der Überrollbügel und damit auch der mit ihm gekoppelte Windschutz auch in einer niedrigeren Höhe angehalten werden kann. Um seine Windschutzfunktion gegen den vom Fahrzeugheck nach vorne gerichteten, für die Fahrzeuginsassen störenden Luftstrom ausreichend zu gewährleisten, genügt eine Höhenlage des Windschutzes, die deutlich unter derjenigen ist, die der Überrollbügel in seiner voll ausgefahrenen Lage haben muß. Die Zwischenstellung von Bügel und Windschutz kann vorgegeben sein. Es ist aber auch möglich, willkürlich verschieden hohe Zwischenstellungen anzusteuern, um die durchaus erwünschte Restluftströmung individuell, ggf. auch abhängig von der Fahrgeschwindigkeit einstellen zu können.

Im Fall eines drohenden Fahrzeugüberschlags wird in jedem Fall sensorgesteuert der Überrollbügel in seine Wirkstellung verlagert, gleichgültig ob Überrollbügel und Windschutz zuvor in der voll abgesenkten Lage waren oder in der Zwischenstellung. In der voll abgesenkten Position stellen sowohl der Überrollbügel als auch der Windschutz keinerlei stilistische Beeinträchtigung dar. Außerdem sind sie geschützt untergebracht.

Es ist besonders zweckmäßig, die Führungen des Überrollbügels, dessen Antrieb und auch ggf. verwendete gesonderte Führungen für den Windschutz vormontierbar auf einer Platte anzuordnen, die dann mit geringem Montageaufwand in das Fahrzeug eingesetzt wird. Sämtliche Einstellungen des Systems und auch dessen Funktionsprüfung können dabei außerhalb des Fahrzeugs erfolgen. Die Platte kann z. B. die Trennwand des Fahrzeugs zwischen Fahrgastraum und Gepäckraum sein. Sie kann mit dem restlichen Karosseriekörper durch Schrauben aber auch durch Schweißen fest verbunden werden.

Weitere vorteilhafte Einzelheiten der Erfindung, die auch Gegenstand von Unteransprüchen sind, sind im folgenden anhand der Zeichnung näher erläutert. Es zeigt
- Fig. 1: eine perspektivische Ansicht einer Ausführungsform des Überrollschutz-Systems in Ruhestellung;
- Fig. 2: eine der Fig. 1 entsprechende Ansicht, jedoch in einer für die Windschutzfunktion geeigneten Höhenlage des Überrollbügels und des Windschutzes;
- Fig. 3 und 4: den Fig. 1 und 2 entsprechende Ansichten einer zweiten Ausführungsform.

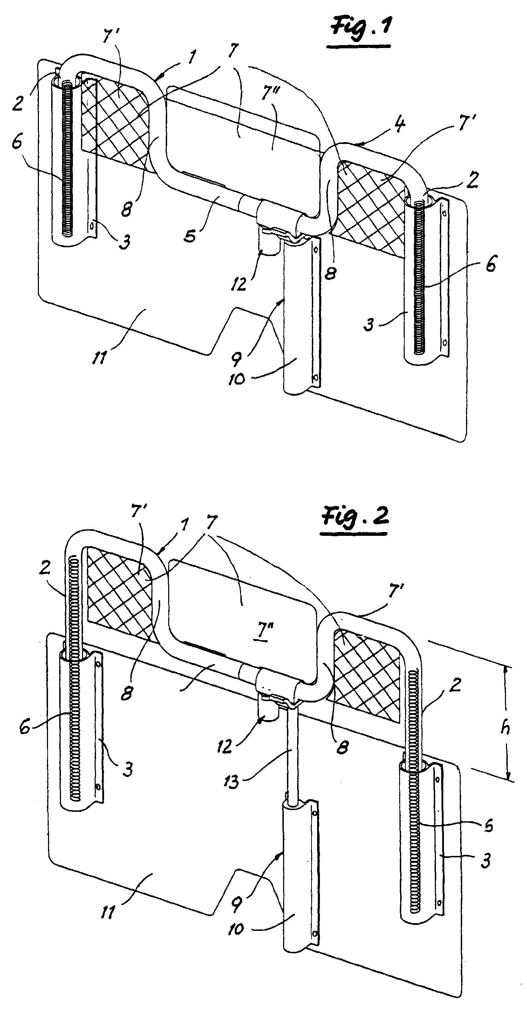

Das in den Fig. 1 und 2 dargestellte Überrollschutz-System umfaßt einen sich annähernd über die Fahrzeugbreite erstreckenden Überrollbügel 1, der hinter zwei Fahrzeugsitzen, im vorliegenden Fall hinter den beiden Fond-Sitzen eines Cabriolets, angeordnet werden kann. Der Überrollbügel hat eine im wesentlichen U-förmige Grundform mit zwei seitlichen Schenkeln 2, die in bekannter Weise in zwei lediglich angedeuteten Kassetten 3 verschiebbar geführt sind. Der die Schenkel 2 oben in Querrichtung verbindende Bügelabschnitt 4 ist in einem mittleren Bereich 5 nach unten abgebogen und verläuft dort horizontal.

Zum Antreiben des Überrollbügels aus der in Fig. 1 ersichtlichen Lage in seine (in der Zeichnung nicht dargestellte) Wirkstellung, in der er bei einem eventuellen Fahrzeugüberschlag die Insassen schützen soll, sind die in den Kassetten 3 aufgenommenen, vorgespannten Druckfedern 6 vorgesehen, die sich mit ihren unteren Enden an den Böden der Kassetten 3 und mit ihren oberen Enden an dem Überrollbügel 1 abstützen.

Der Windschutz 7 des Ausführungsbeispiels nach den Fig. 1 und 2 ist, wie es für einen feststehenden Überrollbügel schon bekannt ist (DE 195 34 584 C1), mehrteilig ausgebildet mit zwei seitlichen Teilen 7', die für Luft teils durchlässig sein können und aus einem Netzmaterial oder einer perforierten Folie bestehen können. Sie sind in dem freien Querschnitt der über das Mittelteil 5 nach oben vorstehenden Bügelteile 8 befestigt. Der oberhalb des mittleren Bereichs 5 des Überrollbügels befindliche Querschnitt des Überrollbügels 1 ist mit einem transparenten Teil 7'' des Windschutzes 7 ausgefüllt. Der transparente Teil 7'' kann aus Kunststoff bestehen.

Wenn das Überrollschutz-System in das Fahrzeug eingebaut ist, sind Überrollbügel 1 und Windschutz 7 in der in Fig. 1 wiedergegebenen Ruhestellung im wesentlichen vollständig unter die (zeichnerisch nicht dargestellte) Brüstungslinie des Fahrzeugs versenkt. Aus dieser Ruhestellung kann das System, wenn mit Windschutz gefahren werden soll, in eine anhand der Fig. 2 veranschaulichte Höhe h gebracht und dort festgelegt werden. In dieser Höhenlage, die zwischen der Ruhelage (Fig. 1) und der (nicht dargestellten) voll ausgefahrenen Stellung des Überrollbügels 1 liegt, sind die vor dem System befindlichen Fahrzeuginsassen gut gegen den bei Cabriolets bekannten, vom Fahrzeugheck zu den Insassen nach vorne gerichteten Luftstrom geschützt. Eine geringe Umströmung der Fahrzeuginsassen kann durchaus noch auftreten und ist auch erwünscht.

Zum Verlagern des Überrollbügels 1 und des an diesem vorgesehenen Windschutzes 7 aus der abgesenkten Stellung gemäß Fig. 1 in die Zwischenstellung bzw. Windschutzstellung gemäß Fig. 2 dient ein zusätzlicher Antrieb 9, mit dem auch das Absenken von Bügel und Windschutz durchgeführt werden kann. Der zusätzliche Antrieb kann ein doppelt wirkender Hydraulik-Zylinder 10 sein.

Es ist besonders zweckmäßig, die durch die Kassetten 3 gebildeten Führungen des Überrollbügels 1, dessen Antriebe, wie die Druckfedern 6 und den zusätzlichen Antrieb 9, ggf. separate Führungen für den Windschutz vormontierbar auf einer in den Fahrzeugkörper einsetzbaren Platte 11 anzuordnen. Die Platte 11 kann dabei die Trennwand zwischen Fahrgastraum und dem Gepäckraum bilden und mit dem übrigen Karosseriekörper durch Verschrauben, aber auch durch Schweißverbindungen verbunden werden.

Erkennt ein im Fahrzeug angeordneter geeigneter Sender die Gefahr eines Fahrzeug-Überschlags, wird eine Kupplung 12 gelöst, mit der der Überrollbügel 1 mit dem zusätzlichen Antrieb 9 verbunden ist. Der Überrollbügel 1 wird dann, gleichgültig ob er sich in der abgesenkten Lage nach Fig. 1 befindet oder in der Zwischenstellung (Windschutzstellung) gemäß Fig. 2, durch die Druckfedern 6 voll ausgefahren und durch einen geeigneten Rastmechanismus in der ausgefahrenen Stellung arretiert. Der Windschutz 7 wird dabei mit allen seinen Teilen mitgenommen. Aus der voll ausgeschobenen Lage kann der Überrollbügel 1 manuell wieder so weit zurückgeschoben werden, bis die Kupplung 12 schließt und den Überrollbügel 1 wieder mit dem zusätzlichen Antrieb 9 verbindet. Der zusätzliche Antrieb 9 dient, wie sich ergibt, auch als Haltevorrichtung für den voll abgesenkten Überrollbügel.

Das elektrisch betätigbare Kupplungsteil der Kupplung 12 ist am freien Ende der auf und ab verlagerbaren Kolbenstange 13 des Hydraulik-Zylinders 10 angebracht und das korrespondierende zweite Teil der Kupplung 12 ist mit dem Überrollbügel 1 verbunden.

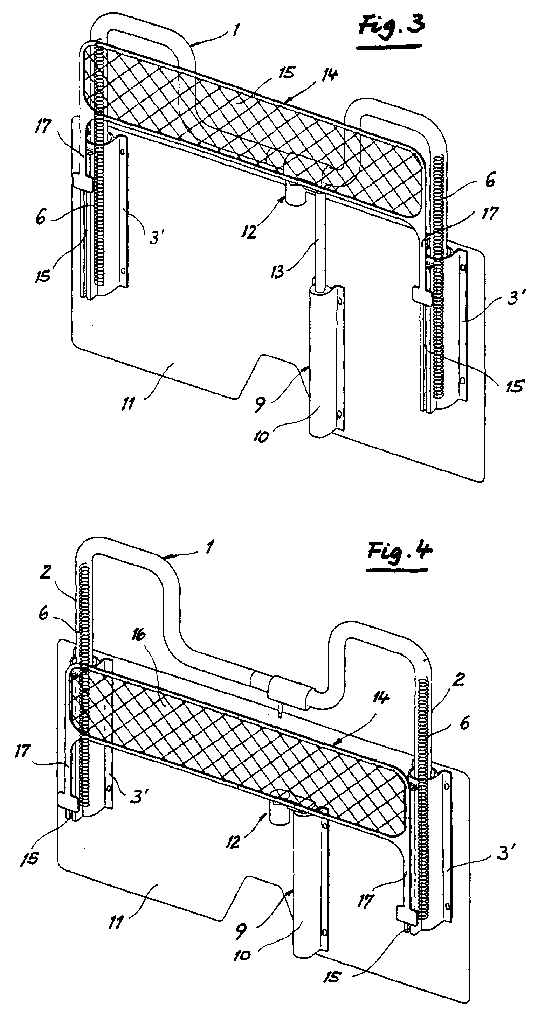

Bei dem Ausführungsbeispiel nach den Fig. 3 und 4 ist ein Windschutz 14 vorgesehen, der in eigenen, zusätzlichen Führungen 15 in Verschieberichtung des Überrollbügels 1 geführt ist. Der Windschutz 14 erstreckt sich quer etwa von einem zum anderen Schenkel 2 des im wesentlichen U-förmigen Überrollbügels 1 und die Führungen 15 des Windschutzes 14 sind an den Kassetten 3' bzw. Führungsrohren des Überrollbügels 1 vorgesehen.

Der Windschutz 14 wird im wesentlichen durch einen langgestreckten Rahmen gebildet, in dem ein Netz 16 oder eine perforierte Folie aufgespannt ist. Von dem erwähnten Rahmen erstrecken sich seitlich nach unten Führungsarme 17, die es erlauben, den Windschutz 14 in seine Windschutzstellung (Fig. 3) zu verlagern, wobei die Führungen 15 trotzdem im Fahrzeugkörper verdeckt sind.

Für den Windschutz 14, der beim Verlagern des Überrollbügels 1 in die als Windschutzstellung definierte Zwischenstellung und zurück von dem zusätzlichen Antrieb 9 mitgenommen wird, können geeignete Feststellmittel in oder an den Führungen 15 vorgesehen sein, die beim Vorliegen eines Überschlag-Signals den Windschutz 14 arretieren. Die Arretierung kann dabei in der voll abgesenkten Position (Fig. 4) erfolgen, oder auch in der Windschutzstellung (Fig. 3). Aus der Position gemäß Fig. 3 wird der Überrollbügel 1 nach Lösen der Kupplung 12 durch die Druckfedern 6 analog zu dem Ausführungsbeispiel nach den Fig. 1 und 2 in die maximal ausgefahrene Position geschoben und dort verriegelt.

Abweichend von den bisher beschriebenen beiden Ausführungsformen kann zum Verlagern des Überrollbügels 1 in die Windschutzstellung und in die ausgefahrene Wirkstellung auch ein einziger Antrieb vorgesehen werden. Dieser einzige Antrieb kann durch einen hydraulischen Antrieb, der vorzugsweise durch wenigstens einen Hydraulik-Zylinder gebildet ist, realisiert werden. Das Festlegen des Überrollbügels 1 und des Windschutzes in der Windschutzstellung und auch das Arretieren des voll ausgefahrenen Überrollbügels 1 in seiner Wirkstellung erfolgt dann allein durch den hydraulischen Antrieb bzw. über den Hydraulik-Zylinder. Man kann sich dabei eines schnell schaltenden Ventilblocks bedienen. In der voll ausgefahrenen Lage des Überrollbügels 1 "verriegelt" der Ventilblock den Hydraulik-Zylinder. Der Hydraulik-Zylinder ist permanent mit dem Überrollbügel 1 verbunden, die schon mehrfach erwähnte Kopplung 12 kann entfallen. Die hydraulisch bewirkte Ausfahrbewegung kann selbstverständlich durch die Druckfedern 6 unterstützt werden. Ebenso kann der ausgefahrene Überrollbügel 1 auch mit Sperrklinken oder ähnlichem in seiner Wirkstellung allein oder zusätzlich arretiert werden.

Die beschriebenen Überrollschutz-Systeme lassen sich durchwegs gut vormontieren und unter Umständen auch als vormontierte und einjustierte Baueinheit beziehen, die dann mit geringem Montageaufwand in das Fahrzeug eingesetzt wird. Durch die Verwendung hydraulischer Antriebe lassen sich die Systeme gut mit schon vorhandenen Hydraulik-Systemen des Fahrzeugs, beispielsweise mit einer Verdeck-Hydraulik kombinieren. Die Systeme ermöglichen eine stilistisch ansprechende Integration von Windschott und Überrollbügel im Gesamtfahrzeug.

## Patentansprüche

1. Überrollschutz-System für ein Kraftfahrzeug, insbesondere für ein Cabriolet, mit einem quer hinter wenigstens einem Sitz angeordneten und durch einen Antrieb transiatorisch aus einer abgesenkten Ruhelage in eine über die Brüstungslinie des Fahrzeugs nach oben überstehende Wirkstellung verlagerbaren Überrollbügel, an dem ein Windschutz angebracht ist,
dadurch gekennzeichnet, daß der Überrollbügel (1) in wenigstens einer zwischen der Ruhelage und der Wirkstellung liegenden Höhe (h) arretierbar ist, in der der Windschutz (7, 14) seine Funktion erfüllt (Windschutzstellung) und aus der der Überrollbügel (1) bei Vorliegen eines Überschlag-Signals weiter in die Wirkstellung verlagerbar ist.

2. System nach Anspruch 1, mit einem sich über annähernd die Fahrzeugbreite erstreckenden Überrollbügel,
dadurch gekennzeichnet, daß der Windschutz (7) mehrteilig ist und einen mittleren, transparenten Teil (7'') umfaßt.

3. System nach Anspruch 1, mit einem unter Federkraft bis in seine Wirkstellung verlagerbaren Überrollbügel,
dadurch gekennzeichnet, daß ein zusätzlicher Antrieb (9) vorgesehen ist, mit dem Überrollbügel (1) und Windschutz (7, 14) von der Ruhelage in die Windschutzstellung und zurück verlagerbar sind.

4. System nach Anspruch 3,
dadurch gekennzeichnet, daß der zusätzliche Antrieb (9) durch einen doppelt wirkenden Hydraulik-Zylinder (10) gebildet wird.

5. System nach Anspruch 3,
dadurch gekennzeichnet, daß die Führungen (Kassetten 3) des Überrollbügels (1), dessen Antriebe (6, 9) und Führungen für den Windschutz vormontierbar auf einer in den Fahrzeugkörper einsetzbaren Platte (11) angeordnet sind.

6. System nach Anspruch 5,
dadurch gekennzeichnet, daß die Platte (11) eine Trennwand zwischen Fahrgastraum und Gepäckraum ist.

7. System nach Anspruch 5,
dadurch gekennzeichnet, daß der Windschutz (14) in zusätzlichen Führungen (15) in Verschieberichtung des Überrollbügels (1) verlagerbar ist.

8. System nach Anspruch 7,
dadurch gekennzeichnet, daß der Windschutz (14) sich quer etwa von einem zum anderen Schenkel (2) eines im wesentlichen U-förmigen Überrollbügels (1) erstreckt und die Führungen (15) des Windschutzes (14) an Führungsrohren des Überrollbügels (1) vorgesehen sind.

9. System nach Anspruch 3,
dadurch gekennzeichnet, daß der Überrollbügel (1) durch eine sensorgesteuerte Kupplung (12) mit dem zusätzlichen Antrieb (9) verbunden ist.

10. System nach Anspruch 9,
dadurch gekennzeichnet, daß nach Lösen der Kupplung (12) der Windschutz (7, 14) in der zuvor eingenommenen Lage arretiert bleibt.

11. System nach Anspruch 1,
dadurch gekennzeichnet, daß zum Verlagern des Überrollbügels (1) in die Windschutzstellung und in die ausgefahrene Wirkstellung ein einziger Antrieb vorgesehen ist.

12. System nach Anspruch 1,
dadurch gekennzeichnet, daß der einzige Antrieb ein hydraulischer Antrieb ist.

13. System nach Anspruch 12,
dadurch gekennzeichnet, daß der hydraulische Antrieb durch wenigstens einen Hydraulik-Zylinder gebildet ist.

14. System nach Anspruch 12 oder 13,
dadurch gekennzeichnet, daß die Arretierung des Überrollbügels (1) in seiner Wirkstellung hydraulisch erfolgt.
